# EUROPÄISCHE PATENTSCHRIFT

(11) **EP 1 809 489 B1**
(45) Veröffentlichungstag und Bekanntmachung des Hinweises auf die Patenterteilung: **15.04.2009**
(21) Anmeldenummer: 05796223.5
(22) Anmeldetag: 14.10.2005
(51) Int. Cl.: B60B 27/00, F16D 3/223

(54) **RADNABEN-GELENK-EINHEIT**
WHEEL HUB JOINT UNIT
UNITE JOINT DE MOYEU DE ROUE

(30) Priorität: 12.11.2004 DE 102004054907
(43) Veröffentlichungstag der Anmeldung: 25.07.2007
(73) Patentinhaber: GKN Driveline Deutschland GmbH, 63073 Offenbach/Main 1 (DE); Schaeffler KG, 97421 Schweinfurt (DE)
(72) Erfinder: CERMAK, Herbert, 63856 Bessenbach (DE); SPRINGER, Alfred, 35043 Marburg (DE); MASUR, Ernst, 97508 Untereuerheim (DE); NIEBLING, Peter, 97688 Bad Kissingen (DE)
(74) Vertreter: Neumann, Ernst Dieter
(86) Internationale Anmeldenummer: PCT/EP2005/011059
(87) Internationale Veröffentlichungsnummer: WO 2006/050785

(56) Entgegenhaltungen:
- EP-A- 1 125 765
- DE-U1- 20 320 496
- US-B1- 6 280 336

## Beschreibung

Die Erfindung betrifft eine Radnaben-Gleichlaufdrehgelenk-Einheit bei welcher eine Radnabe mit einer Durchgangsöffnung, die eine innere Wellenverzahnung trägt, mit dem Gelenkaußenteil eines Gleichlaufdrehgelenks verspannt ist, an dem ein Zapfen mit einer äußeren Wellenverzahnung angeformt ist, wobei innere Wellenverzahnung der Durchgangsöffnung und äußere Wellenverzahnung des Zapfens ineinandergreifen, und ein zweireihiges Radlager auf die Radnabe aufgeschoben ist, die einen inneren Lagerring umfaßt, an dem sich eine Stirnfläche des Gelenkaußenteils unmittelbar abstützt. Eine sich außen an der Radnabe abstützende Schraube, die in ein Gewindeloch im Zapfen eingedreht ist, dient der Verspannung. Eine solche Einheit ist aus der DE 203 20 496 U1 bekannt, die den Oberbegriffen der Ansprüche 1, 7, 9 und 11 entspricht. Anordnungen dieser Art werden an angetriebenen, insbesondere gelenkten Rädern von Kraftfahrzeugen verwendet, wobei am Flansch der Radnabe das Rad sowie gegebenenfalls eine Bremsscheibe angeschraubt werden, während das Gleichlaufdrehgelenk einen integralen Bestandteil einer Antriebswelle (Seitenwelle) bildet, die aus einer Zwischenwelle, einem innenliegenden Verschiebegelenk und dem hier genannten Gleichlaufdrehgelenk besteht, das als Gleichlauffestgelenk (Vorderradantrieb) oder ebenfalls als Verschiebegelenk (Hinterradantrieb) ausgebildet sein kann. Die Lageranordnung ist in einem Radträger bzw. Achsschenkel einzusetzen.

Bei bekannten Anordnungen der genannten Art geht die Auslegung dahin, das Radlager möglichst klein zu dimensionieren, sowohl aus Kostengründen in Bezug auf das Radlager als auch im Hinblick auf die Baugröße des Radträgers bzw. Achsschenkels. Unter dem genannten Gesichtspunkt wird der Zapfendurchmesser am Gelenkaußenteil auf die benötigte Mindestfestigkeit ausgelegt, wobei der Zapfendurchmesser zugleich den Innendurchmesser der Radnabe und damit indirekt, über die festigkeitsbedingte Wandstärke der Nabe, den inneren Durchmesser des Radlagers bestimmt. Infolge der Elastizität des in dieser Weise ausgelegten Zapfens kommt es bei Drehmomentänderung, insbesondere bei Drehmomentstößen, die durch die Anordnung durchgeleitet werden, zu Relativbewegungen zwischen Gelenkaußenteil und Radlagerinnenring an den wechselseitigen Anschlagflächen. Dies führt zu Geräuschentwicklung und ebenfalls zur Passungskorrosion.

Hiervon ausgehend liegt der Erfindung die Aufgabe zugrunde, ein neuartiges Konzept für eine Einheit der genannten Art bereitzustellen, die eine höhere Steifigkeit bei kurzer Bauweise sichert und die vorgenannten Nachteile vermeidet. Gemäß der vorliegenden Erfindung liegt eine erste Lösung in einem wesentlich verkürzten Mittenabstand von Gelenk und Lager im Verhältnis von gegebenen Größen für die Lagerbreite und den Gelenkdurchmesser. Gemäß der vorliegenden Erfindung liegen weitere Lösungen in einer qualitativ veränderten Dimensionierung des Zapfens, der wesentlich kürzer und dicker dargestellt wird. Hiermit ändert sich zugleich der Innendurchmesser der Radnabe und damit mittelbar der Innendurchmesser und der Teilkreisdurchmesser der Radlagerung. Vorteilhafte Auswirkungen sind eine wesentliche Erhöhung der Kippsteifigkeit der Lagerung und eine Erhöhung der Lagerbelastbarkeit und damit der Lagerlebensdauer.

Die obengenannten Relativbewegungen zwischen Gelenkaußenteil und Radlagerinnenring werden vermieden bzw. deutlich verringert. Hierfür ist zum einen der größere Querschnitt des Zapfens und damit die größere Torsionsfestigkeit, zum anderen der größere Wirkradius der Wirkfläche der wechselseitigen Abstützung zwischen Gelenkaußenteil und nunmehr größerem Lagerinnenring ursächlich.

Die qualitativ geänderte Dimensionierung kann über verschiedene charakteristische Größenverhältnisse definiert werden, die sich von bisher verwendeten Größenverhältnissen qualitativ unterscheiden.

Nach einem ersten Lösungsansatz wird festgelegt, daß die Hälfte der Summe aus Teilkreisdurchmesser PCD der Gelenkkugeln im Gleichlaufdrehgelenk und Lagerbreite B_{L} größer ist, als der Mittenabstand A_{GL} zwischen der Gelenkmitte M_{G} des Gleichlaufdrehgelenks bei gestrecktem Gelenk und der geometrischen Mitte M_{L} des Radlagers. Bevorzugte Ausführungsformen und Weiterbildungen werden nachstehend angeführt.

Nach einer ersten bevorzugten Ausführung ist vorgesehen, daß das Verhältnis aus Lagerbreite B_{L} und Zapfendurchmesser an der Lagerbasis D_{Z} kleiner 1 ist, d. h. B_{L} / D_{Z} < 1.

Eine andere bevorzugte Ausführung sieht vor, daß das Verhältnis aus Zapfenlänge L_{Z} und Teilkreisdurchmesser der Lagerkugeln kleiner 0,5 ist, d. h. L_{Z} / TKD < 0,5.

Nach einer weiteren bevorzugten Ausführungsform wird vorgeschlagen, daß das Verhältnis der genutzten Verzahnungslänge L_{VERZ}. und Teilkreisdurchmesser der Lagerkugeln kleiner 0,25 ist, d. h. L_{VEZ.} / TKD < 0,25.

Daneben wird nach einer weiteren Ausführungsform vorgesehen, daß das Verhältnis aus Teilkreisdurchmesser der Lagerkugeln und Lagerbreite größer 1,9 ist, d. h. TKD / B_{L} > 1,9.

Schließlich zeichnet sich eine weitere Ausführungsform dadurch aus, daß die Querschnittsfläche A_{E} der Radnabe im Bereich eines separaten Lagerinnenrings und Quadrat der Dehnlänge L_{DEHN} einer Schraube zur Verbindung von Radnabe und Gelenkaußenteil größer 0,2 ist, d. h. A_{E} / L_{DEHN}² > 0,2. Durch diese Kennzahl kann die Steifigkeit im verspannten Volumen der Radnabe mit dem Querschnitt A_{E} aufgezeigt werden.

Nach einem zweiten Lösungsansatz ist vorgesehen, das Verhältnis aus Mittenabstand A_{GL} zwischen Gleichlaufdrehgelenk und Radlager einerseits und Zapfendurchmesser an der Zapfenbasis D_{Z} andererseits kleiner 2 ist, d.h. A_{GL}/D_{Z} < 2. Hierbei wird insbesondere vorgeschlagen, das Verhältnis aus Mittenabstand zwischen Gleichlaufdrehgelenk und Radlager einerseits und Zapfendurchmesser an der Zapfenbasis D_{Z} andererseits kleiner 1,5, d.h. A_{GL}/D_{Z} < 1,5, insbesondere kleiner 1,2 ist, d.h. A_{GL}/D_{Z} < 1,2. Damit wird ein besonders drehsteifer Zapfen in der Konstruktion erreicht, um die Relativbewegungen zwischen Lagerinnenring und Gelenkanschlagfläche zu minimieren.

Eine dritte Lösung geht davon aus, daß das Verhältnis aus Teilkreisdurchmesser des Radlagers TKD und Zapfenlänge L_{Z} größer 2 ist, d.h. TKD/L_{Z} > 2. Hierbei kann bevorzugt vorgesehen sein, daß das Verhältnis aus Teilkreisdurchmesser des Radlager TKD und Zapfenlänge L_{Z} größer 2,25 ist, d.h. TKD/L_{Z} > 2,25, insbesondere größer 2,85 ist, d.h. TKD/L_{Z} > 2,85. Damit wird zur Drehsteifigkeit des Zapfens eine Kippsteifigkeit des Radlagers gepaart, um die Geräuschbildung durch die Relativbewegungen zwischen Lagerinnenring und Gelenkanschlagfläche, als auch den Einfluß der Verformungen, insbesondere der Radnabe, im Betrieb zu minimieren.

Schließlich ist nach einer weiteren Lösung vorgesehen, daß das Verhältnis aus Mittenabstand A_{GL} zwischen Gleichlaufdrehgelenk und Radlager einerseits und Zapfenlänge L_{Z} andererseits größer 1,95 ist, d.h. A_{GL}/L_{Z} > 1,95, wobei das Verhältnis insbesondere größer 2,0 sein soll, d.h. A_{GL}/L_{Z} > 2,0.

Mit sämtlichen vorgenannten Definition werden bekannten Größenverhältnisse von Einheiten der genannten Art verlassen und eine Einheit mit sprunghaft verbesserten Eigenschaften garantiert. Ersichtlich ist dies auch an der Kennzahl D_{Z}⁴ der Widerstandsmomente, die auf über 2 · 10⁶ mm⁴ steigt, und der Kennzahl D_{Z}⁴/L_{Z} der auf die Zapfenlänge bezogenen Widerstandsmomente, die auf über 10⁶ mm³ steigt.

Die genannten erfindungsgemäßen Lösungen können auch in Kombination mehrerer oder aller Ansätze miteinander zur vorteilhaften Anwendung kommen.

Nach einer bevorzugten Ausführungsform, die für alle vorgenannten Lösungen gilt, wird vorgesehen, daß das Radlager ausschließlich einen separaten Lagerinnenring umfaßt. Nach einer weiteren günstigen Weiterbildung ist vorgesehen, daß die Radnabe axial entgegengesetzt zur inneren Wellenverzahnung eine Durchmesserreduzierung der Durchgangsöffnung aufweist, um die Festigkeit der Nabe weiter zu steigern. Weiter wird vorgeschlagen, daß der Zapfen eine zentrale Gewindebohrung aufweist, in die eine Schraube zur Verspannung der Radnabe mit dem Gelenkaußenteil eingedreht ist. Schließlich ist in günstiger Weise vorzusehen, daß der Schraubenkopf sich im Bereich der Durchmesserreduzierung an einer Stützfläche der Radnabe abstützt.

Wie bereits eingangs angeführt, ist es bei allen vorgenannten Lösungen möglich, daß das Gelenk ein Festgelenk ist, wobei die Mitte des Gelenks M_{G} axial durch die Ebene der Kugelmitten bei gestrecktem Gelenk definiert ist. Alternativ hierzu kann bei allen Lösungen vorgesehen sein, daß das Gelenk ein Verschiebegelenk ist, wobei die Mitte des Gelenks M_{G} axial durch die Ebene der Kugelmitten bei gestrecktem und auf die Mitte des axialen Verschiebewegs V_{S} eingestellten Gelenks definiert ist.

Ein bevorzugtes Ausführungsbeispiel einer erfindungsgemäßen Radnaben-Gelenk-Einheit ist im Vergleich mit einer Einheit nach dem Stand der Technik in den Zeichnungen dargestellt und wird nachstehend beschrieben.
- Figur 1: zeigt eine Einheit nach dem Stand der Technik im Längsschnitt unter Angabe allgemeiner Bezugsziffern;
- Figur 2: zeigt die Einheit nach Figur 1 unter Angabe charakteristischer Kenngrößen;
- Figur 3: zeigt eine erfindungsgemäße Einheit mit einem Gleichlauffestgelenk unter Angabe allgemeiner Bezugszeichen;
- Figur 4: zeigt die Einheit nach Figur 3 unter Angabe charakteristischer Kenngrößen;
- Figur 5: zeigt eine erfindungsgemäße Einheit mit einem Gleichlaufverschiebegelenk unter Angabe allgemeiner Bezugszeichen;
- Figur 6: zeigt die Einheit nach Figur 5 unter Angabe charakteristischer Kenngrößen.

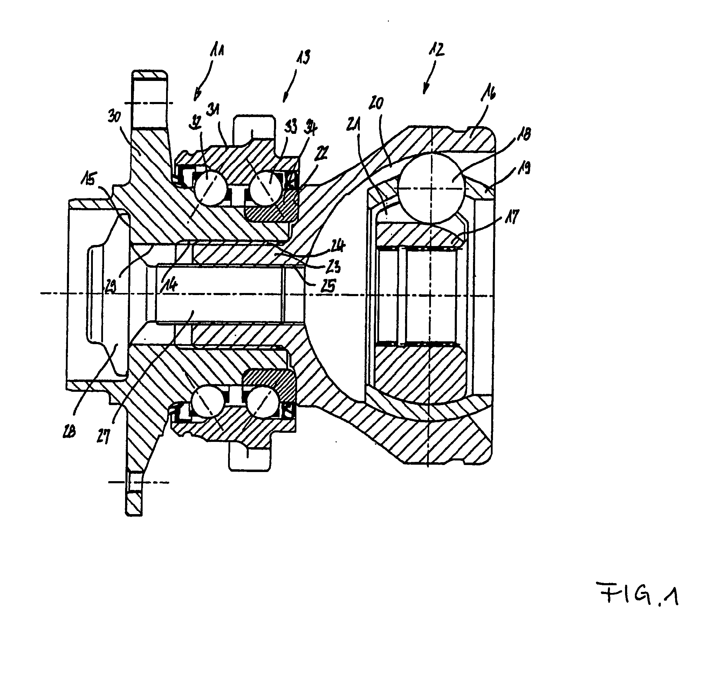

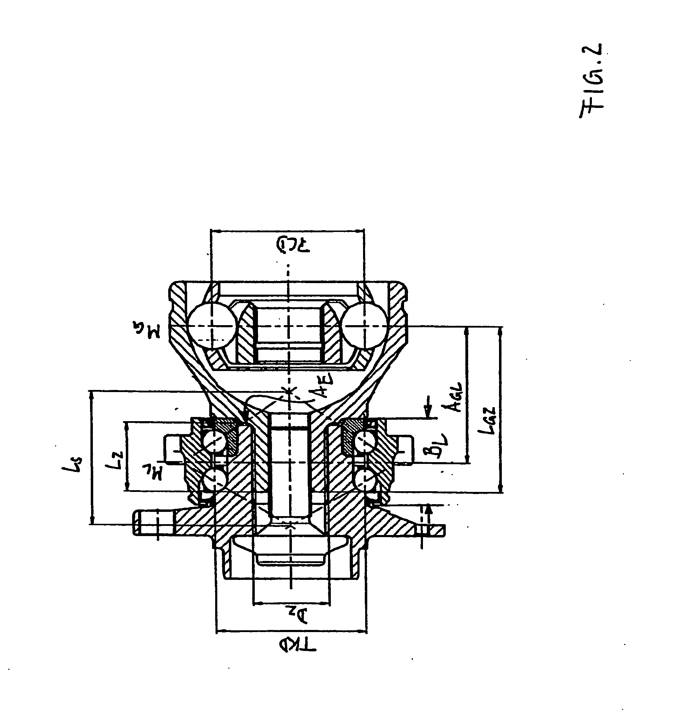

In den Figuren 1 und 2 ist jeweils eine Radnabeneinheit 11 für ein Antriebsrad eines Kraftfahrzeuges mit einem Gleichlauffestgelenk 12 zur Verbindung mit einer Antriebswelle verbunden. Die Radnabeneinheit 11 umfaßt eine Lagereinheit 13 und eine Radnabe 30, wobei die Lagereinheit 13 auf die Radnabe 30 aufgezogen und zwischen Radnabe 30 und Gleichlauffestgelenk 12 axial verspannt ist. Die Radnabe 30 umfaßt einen Flansch zur Anschraubung eines Rades, an dem auch eine Bremsscheibe angeschraubt werden kann. Die Radnabe 30 weist weiterhin eine Durchgangsöffnung 29 auf, in der von Seiten des Gelenkes her eine innere Wellenverzahnung 14 eingeformt ist. Am Flansch ist eine mittige im wesentlichen radiale Abstützfläche 15 ausgebildet. Das Gleichlauffestgelenk 12 ist nach Art eines UF-Gelenkes ausgebildet und umfaßt ein Gelenkaußenteil 16, ein Gelenkinnenteil 17, drehmomentübertragende Kugeln 18 sowie einen Kugelkäfig 19. Die Kugeln sind in Paaren aus äußeren Kugelbahnen 20 im Gelenkaußenteil und inneren Kugelbahnen 21 im Gelenkinnenteil gehalten und geführt. Am Gelenkaußenteil 16 ist radnabenseitig eine im wesentlichen radiale Stützfläche 22 ausgebildet. Weiterhin ist ein zentraler Zapfen 23 am Gelenkaußenteil angesetzt, der eine äußere Wellenverzahnung 24 trägt, die in die innere Wellenverzahnung 14 der Nabe eingreift. Im Zapfen ist weiterhin eine durchgehende zentrale Gewindebohrung 25 ausgebildet, in die eine Schraube 27 eingedreht ist, die sich mit ihrem Schraubenkopf 28 auf der radialen Abstützfläche 15 des Flansches 12 abstützt. Das zweireihige Lager 13 umfaßt einen Lageraußenring 31, der in einen Radträger eingesetzt werden kann, und nicht näher bezeichnete äußere Lagerrillen für zwei Reihen von Lagerkugeln 32, 33 ausbildet. Eine erste innere Lagerrille für die Kugelreihe 32 ist unmittelbar in der Radnabe 30 ausgebildet, während eine zweite Kugelrille für die zweite Kugelreihe 33 in einem separaten Lagerinnenring 34 ausgebildet ist. Der Lagerinnenring 34 steht axial über die Radnabe 30 über, so daß die Lageranordnung 13 unter Einwirkung der Stützfläche 22 am Gelenkaußenteil mittels der sich an der Stützfläche 15 abstützenden Schraube 27 vorgespannt werden kann. Die Anordnung nach den Figuren 1 und 2 ist auf eine Minimierung des Teilkreisdurchmessers TKD der Radlagerung ausgelegt. Hierbei ist der Zapfen 23 auf seine Mindestfestigkeit ausgelegt und weist bei relativ geringem Zapfendurchmesser D_{Z} eine große Zapfenlänge L_{Z} auf. Hierdurch wächst der Abstand zwischen der konstruktiven Lagermitte M_{L} und der konstruktiven Gelenkmittel M_{G}; dieser Abstand ist mit A_{GL} bezeichnet. In gleicher Weise der ebenfalls eingezeichnete Abstand von der Gelenkmitte bis zum Zapfenende, der mit L_{GZ} bezeichnet ist und etwa A_{GL} + L_{Z} / 2 entspricht. Als weitere charakteristische Größe ist in Figur 2 der Teilkreisdurchmesser PCD des Gelenks eingezeichnet. Daneben finden sich noch die Stützlänge L_{S} des Lagers, das eine sogenannte O-Konfiguration aufweist, wobei die Wirklinien der Kugeln auf symmetrischen Konusflächen liegen, die sich zueinander öffnen, sowie die Lagerbreite B_{L} des Lagers.

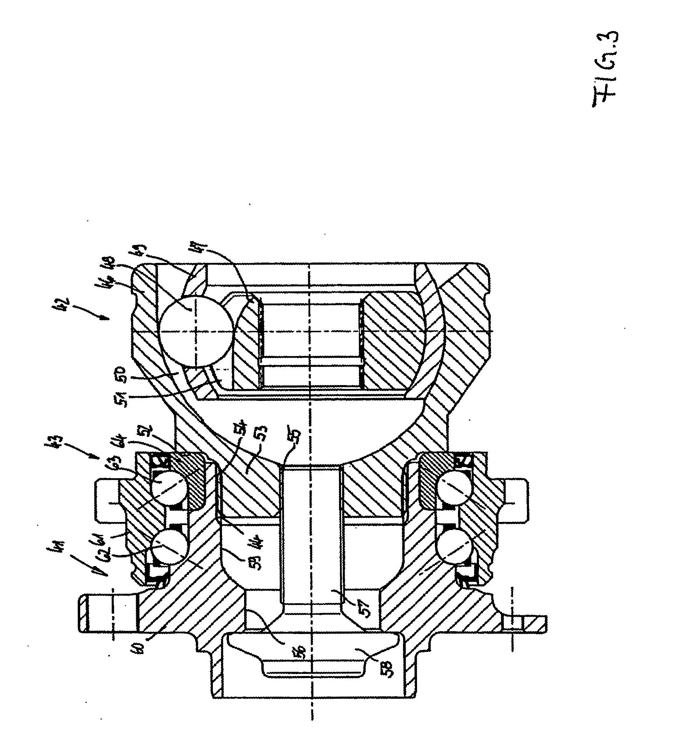

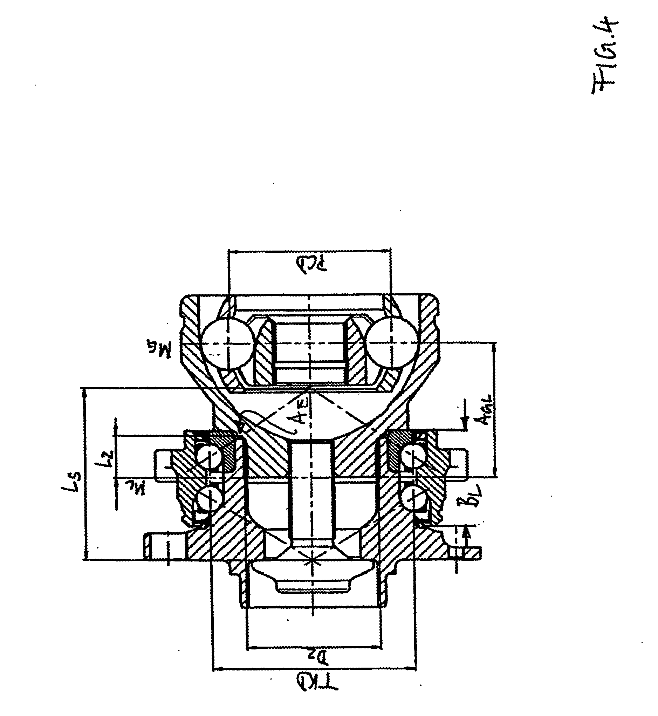

In den Figuren 3 und 4 ist jeweils eine Radnabeneinheit 41 für ein Antriebsrad eines Kraftfahrzeuges mit einem Gleichlauffestgelenk 42 zur Verbindung mit einer Antriebswelle verbunden. Die Radnabeneinheit 41 umfaßt eine Lagereinheit 43 und eine Radnabe 60, wobei die Lagereinheit 43 auf die Radnabe 60 aufgezogen und zwischen Radnabe 60 und Gleichlauffestgelenk 42 axial verspannt ist. Die Radnabe 60 umfaßt einen Flansch zur Anschraubung eines Rades, an dem auch eine Bremsscheibe angeschraubt werden kann. Die Radnabe 60 weist weiterhin eine Durchgangsöffnung 59 auf, in der von Seiten des Gelenkes her eine innere Wellenverzahnung 44 eingeformt ist. Am Flansch ist eine mittige im wesentlichen radiale Abstützfläche 45 ausgebildet. Das Gleichlauffestgelenk 42 ist nach Art eines UF-Gelenkes ausgebildet und umfaßt ein Gelenkaußenteil 46, ein Gelenkinnenteil 47, drehmomentübertragende Kugeln 48 sowie einen Kugelkäfig 49. Die Kugeln sind in Paaren aus äußeren Kugelbahnen 50 im Gelenkaußenteil und inneren Kugelbahnen 51 im Gelenkinnenteil gehalten und geführt. Am Gelenkaußenteil 46 ist radnabenseitig eine im wesentlichen radiale Stützfläche 52 ausgebildet. Weiterhin ist ein zentraler Zapfen 53 am Gelenkaußenteil angesetzt, der eine äußere Wellenverzahnung 54 trägt, die in die innere Wellenverzahnung 44 der Nabe eingreift. Im Zapfen ist weiterhin eine durchgehende zentrale Gewindebohrung 55 ausgebildet, in die eine Schraube 57 eingedreht ist, die sich mit ihrem Schraubenkopf 58 auf der radialen Abstützfläche 45 der Radnabe 60 abstützt. Die Stützfläche 45 ist hierbei an einer Durchmesserreduzierung 56 der Durchgangsöffnung 59 ausgebildet. Das zweireihige Lager 43 umfaßt einen Lageraußenring 61, der in einen Radträger eingesetzt werden kann, und nicht näher bezeichnete äußere Lagerrillen für zwei Reihen von Lagerkugeln 62, 63 ausbildet. Eine erste innere Lagerrille für die Kugelreihe 62 ist unmittelbar in der Radnabe 41 ausgebildet, während eine zweite Kugelrille für die zweite Kugelreihe 63 in einem separaten Lagerinnenring 64 ausgebildet ist. Der Lagerinnenring 64 steht axial über die Radnabe 60 über, so daß die Lageranordnung 43 unter Einwirkung der Stützfläche 52 am Gelenkaußenteil 46 mittels der sich an der Stützfläche 45 abstützenden Schraube 57 vorgespannt werden kann. Bei einem erfindungsgemäßen Gelenk der in den Figuren 3 und 4 gezeigten Art ist ein qualitativ größerer Teilkreisdurchmesser TKD der Lageranordnung zugelassen, da zur deutlichen Reduzierung des Abstandes A_{GL} zwischen der Lagermitte M_{L} und der Gelenkmitte M_{G} ein deutlicher qualitativer Zuwachs des Zapfendurchmesser D_{Z} vorgenommen worden ist. Dieser Zuwachs im Zapfendurchmesser D_{Z} erlaubt eine Verkürzung der Zapfenlänge L_{Z}. Auch in Figur 4 sind als weitere Kenngrößen, auf die in der Beschreibung bzw. in den Ansprüchen Bezug genommen wurde, der Teilkreisdurchmesser PCD des Gelenkes, die Lagerbreite B_{L} sowie die Stützlänge L_{S} der Lageranordnung gezeigt. Ebenfalls sind die Dehnlänge L_{DEHN} der Schraube und die ringförmige Querschnittsfläche A_{E} der Radnabe unter dem separaten Lagerinnenring bezeichnet. Auch hier hat die Lagerung eine O-Konfiguration mit Wirklinien der Kugeln, die auf symmetrischen zueinander offenen Konusflächen liegen.

Im Vergleich mit einer Anordnung nach den Figuren 1 und 2, bei der der Zapfen im Durchmesser minimiert ist und dabei relativ verdrehweich ist, zeigt die erfindungsgemäße Anordnung nach den Figuren 3 und 4 einen kurzen dicken und damit verdrehsteifen Zapfen. Die bisher unter wechselndem Drehmoment auftretenden Mikrobewegungen zwischen der Stützfläche am Gelenkaußenteil und der entsprechenden Gegenfläche am separaten Lagerinnenring treten beim erfindungsgemäßen Gelenk nicht mehr auf.

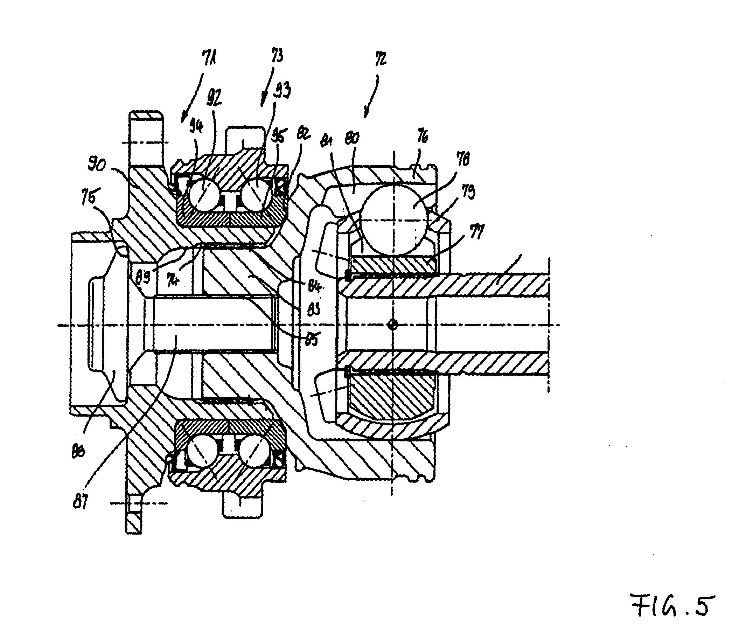

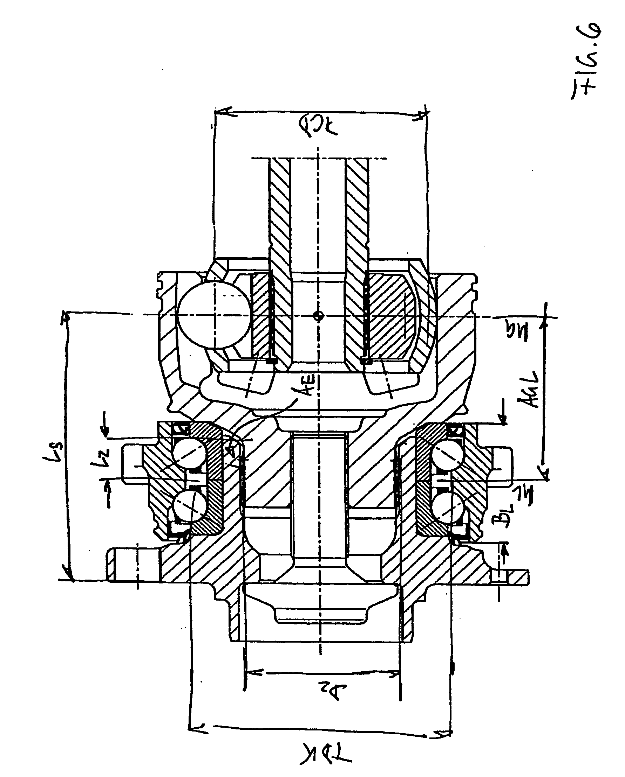

In den Figuren 5 und 6 ist jeweils eine Radnabeneinheit 71 für ein Antriebsrad eines Kraftfahrzeuges mit einem Gleichlaufverschiebegelenk 72 zur Verbindung mit einer Antriebswelle verbunden, wobei eine Lagereinheit 73 auf die Radnabeneinheit 71 aufgezogen und zwischen Radnabeneinheit 71 und Gleichlaufverschiebegelenk 72 axial verspannt ist. Die Radnabe 90 umfaßt einen Flansch zur Anschraubung eines Rades, an dem auch eine Bremsscheibe angeschraubt werden kann. Die Radnabe 90 weist weiterhin eine Durchgangsöffnung 89 auf, in der von Seiten des Gelenkes her eine innere Wellenverzahnung 74 eingeformt ist. Am Flansch ist eine mittige im wesentlichen radiale Abstützfläche 75 ausgebildet. Das Gleichlaufverschiebegelenk 72 ist nach Art eines VL-Gelenkes ausgebildet und umfaßt ein Gelenkaußenteil 76, ein Gelenkinnenteil 77, drehmomentübertragende Kugeln 78 sowie einen Kugelkäfig 79. Die Kugeln sind in Paaren aus äußeren Kugelbahnen 80 im Gelenkaußenteil und inneren Kugelbahnen 81 im Gelenkinnenteil gehalten und geführt. Am Gelenkaußenteil 76 ist radnabenseitig eine im wesentlichen radiale Stützfläche 82 ausgebildet. Weiterhin ist ein zentraler Zapfen 83 am Gelenkaußenteil angesetzt, der eine äußere Wellenverzahnung 84 trägt, die in die innere Wellenverzahnung 74 der Nabe eingreift. Im Zapfen ist weiterhin eine durchgehende zentrale Gewindebohrung 85 ausgebildet, in die eine Schraube 87 eingedreht ist, die sich mit ihrem Schraubenkopf 88 auf der radialen Abstützfläche 75 der Radnabe 90 abstützt. Die Stützfläche 75 ist hierbei an einer Durchmesserreduzierung 86 der Durchgangsöffnung 89 ausgebildet. Das zweireihige Lager 73 umfaßt einen Lageraußenring 91, der in einen Radträger eingesetzt werden kann, und nicht näher bezeichnete äußere Lagerrillen für zwei Reihen von Lagerkugeln 92, 93 ausbildet. Eine erste innere Lagerrille für die Kugelreihe 62 ist in einem Lagerinnenring 94 ausgebildet, während eine zweite Kugelrille für die zweite Kugelreihe 63 in einem Lagerinnenring 95 ausgebildet ist. Der Lagerinnenring 94 steht axial über die Radnabe 90 über, so daß die Lageranordnung 73 unter Einwirkung der Stützfläche 82 am Gelenkaußenteil mittels der sich an der Stützfläche 75 abstützenden Schraube 87 vorgespannt werden kann. Bei einem erfindungsgemäßen Gelenk der in den Figuren 5 und 6 gezeigten Art ist ein qualitativ größerer Teilkreisdurchmesser TKD der Lageranordnung zugelassen, da zur deutlichen Reduzierung des Abstandes A_{GL} zwischen der Lagermitte M_{L} und der Gelenkmitte M_{G} ein deutlicher qualitativer Zuwachs des Zapfendurchmesser D_{Z} vorgenommen worden ist. Dieser Zuwachs im Zapfendurchmesser D_{Z} erlaubt eine Verkürzung der Zapfenlänge L_{Z}. Auch in Figur 4 sind als weitere Kenngrößen, auf die in der Beschreibung bzw. in den Ansprüchen Bezug genommen wurde, der Teilkreisdurchmesser PCD des Gelenkes, die Lagerbreite B_{L} sowie die Stützlänge L_{S} der Lageranordnung gezeigt. Ebenfalls sind die Dehnlänge L_{DEHN} der Schraube und die ringförmige Querschnittsfläche A_{E} der Radnabe unter dem separaten Lagerinnenring bezeichnet. Die Gelenkmitte M_{G} liegt mittig zwischen dem nach beiden Seiten davon angetragenen halben Verschiebeweg V_{S}/2. Auch hier hat die Lagerung eine O-Konfiguration mit Wirklinien der Kugeln, die auf symmetrischen zueinander offenen Konusflächen liegen.

Im Vergleich mit einer Anordnung nach den Figuren 1 und 2, bei der der Zapfen im Durchmesser minimiert ist und dabei relativ verdrehweich ist, zeigt die erfindungsgemäße Anordnung nach den Figuren 5 und 6 einen kurzen dicken und damit verdrehsteifen Zapfen. Die bisher unter wechselndem Drehmoment auftretenden Mikrobewegungen zwischen der Stützfläche am Gelenkaußenteil und der entsprechenden Gegenfläche am separaten Lagerinnenring treten beim erfindungsgemäßen Gelenk nicht mehr auf.

### Bezugszeichenliste

- 11, 41, 71: Radnabeneinheit
- 12, 42, 72: Gleichlaufdrehgelenk
- 13, 43, 73: Radlagerung
- 14,44,74: innere Wellenverzahnung
- 15,45,75: Stützfläche (Radnabe)
- 16, 46, 76: Gelenkaußenteil
- 17,47,77: Gelenkinnenteil
- 18,48,78: Kugel
- 19,49,79: Kugelkäfig
- 20, 50, 80: Kugelbahn außen
- 21, 51, 81: Kugelbahn innen
- 22, 52, 82: Stützfläche (Gelenkaußenteil)
- 23, 53, 83: Zapfen
- 24, 54, 84: äußere Wellenverzahnung
- 25, 55, 85: Gewindebohrung
- 56, 86: Durchmesserreduzierung
- 27, 57, 87: Schraube
- 28,58,88: Schraubenkopf
- 29,59,89: Durchgangsöffnung
- 30,60,90: Radnabe
- 31,61,91: äußerer Lagerring
- 32,62,92: Kugelreihe
- 33,63,93: Kugelreihe
- 34, 64, 94: innerer Lagerring
- 95: innerer Lagerring
- TKD: Teilkreisdurchmesser Lager
- D_{Z}: Zapfendurchmesser
- L_{Z}: Zapfenlänge
- M_{L}: Lagermitte
- M_{G}: Gelenkmitte
- A_{GL}: Abstand Lagermitte - Gelenkmitte
- L_{GZ}: Abstand Gelenkmitte - Zapfenende
- PCD: Teilkreisdurchmesser Gelenk
- L_{S}: Stützlänge Lagerung
- V_{S}: Verschiebeweg
- A_{E}: Querschnittsfläche Radnabe
- L_{DEHN}: Dehnlänge Schraubenschaft

## Patentansprüche

1. Radnaben-Gleichlaufdrehgelenk-Einheit, bei welcher eine Radnabe (60, 90) mit einer Durchgangsöffnung (59, 89), die eine innere Wellenverzahnung (44, 74) trägt, mit dem Gelenkaußenteil (46, 76) eines Gleichlaufdrehgelenks (42, 72) verspannt ist, an dem ein Zapfen (53, 83) mit einer äußeren Wellenverzahnung (54, 84) angeformt ist, wobei innere Wellenverzahnung (44, 74) der Durchgangsöffnung (59, 89) und äußere Wellenverzahnung (54, 84) des Zapfens (53, 83) ineinandergreifen, und ein zweireihiges Radlager (43, 73) auf die Radnabe (60, 90) aufgeschoben ist, die einen inneren Lagerring (64, 94) umfaßt, an dem sich eine Stirnfläche (52, 82) des Gelenkaußenteils (46, 76) unmittelbar abstützt,
**dadurch gekennzeichnet,**
**daß** die Hälfte der Summe aus Teilkreisdurchmesser PCD der Gelenkkugeln des Gleichlaufdrehgelenks und Lagerbreite B_{L} größer ist als der Mittenabstand A_{GL} zwischen Gleichlaufdrehgelenk (42, 72) und Radlager (43, 73), d. h. (PCD + B_{L}) /2 > A_{GL}.

2. Einheit nach Anspruch 1,
**dadurch gekennzeichnet,**
**daß** das Verhältnis aus Lagerbreite B_{L} und Zapfendurchmesser an der Lagerbasis D_{Z} kleiner 1 ist, d. h. B_{L} / D_{Z} < 1.

3. Einheit nach Anspruch 1,
**dadurch gekennzeichnet,**
**daß** das Verhältnis aus Zapfenlänge L_{Z} und Teilkreisdurchmesser der Lagerkugeln TKD kleiner 0,5 ist, d. h. L_{Z} / TKD < 0,5.

4. Einheit nach Anspruch 1,
**dadurch gekennzeichnet,**
**daß** das Verhältnis der genutzten Verzahnungslänge L_{VERZ}. und Teilkreisdurchmesser der Lagerkugeln TKD kleiner 0,25 ist, d. h. L_{VERZ}. / TKD < 0,25.

5. Einheit nach Anspruch 1,
**dadurch gekennzeichnet,**
**daß** das Verhältnis aus Teilkreisdurchmesser der Lagerkugeln TKD und Lagerbreite B_{L} größer 1,9 ist, d. h. TKD / B_{L} > 1,9.

6. Einheit nach Anspruch 1,
**dadurch gekennzeichnet,**
**daß** das Verhältnis aus Querschnittsfläche A_{E} der Radnabe (60,90) im Bereich eines separaten Lagerinnenrings (64, 94) und Quadrat der Dehnlänge L_{DEHN} einer Schraube (57, 87) zur Verbindung von Radnabe (60,90) und Gelenkaußenteil (46, 76) größer 0,2 ist, d. h. A_{E} / L_{DEHN}² > 0,2.

7. Radnaben-Gleichlaufdrehgelenk-Einheit, bei welcher eine Radnabe (60, 90) mit einer Durchgangsöffnung (59, 89), die eine innere Welleverzahnung (44, 74) trägt, mit dem Gelenkaußenteil (46, 76) eines Gleichlaufdrehgelenks (42, 72) verspannt ist, an dem ein Zapfen (53, 83) mit einer äußeren Wellenverzahnung (54, 84) angeformt ist, wobei innere Wellenverzahnung (44, 74) der Durchgangsöffnung (59, 89) und äußere Wellenverzahnung (54, 84) des Zapfens (53, 83) ineinandergreifen, und ein zweireihiges Radlager (43, 73) auf die Radnabe (60, 90) aufgeschoben ist, die einen inneren Lagerring (64, 94) umfaßt, an dem sich eine Stirnfläche (52, 82) des Gelenkaußenteils (46, 76) unmittelbar abstützt,
**dadurch gekennzeichnet,**
**daß** das Verhältnis aus Mittenabstand A_{GL} zwischen Gleichlaufdrehgelenk (42, 72) und Radlager (43, 73) einerseits und Zapfendurchmesser an der Zapfenbasis D_{Z} andererseits kleiner 2 ist, d.h. A_{GL}/D_{Z} < 2.

8. Einheit nach Anspruch 7,
**dadurch gekennzeichnet,**
**daß** das Verhältnis aus Mittenabstand A_{GL} zwischen Gleichlaufdrehgelenk (42, 72) und Radlager (43, 73) einerseits und Zapfendurchmesser an der Zapfenbasis D_{Z} andererseits kleiner 1,5 ist, d.h. A_{GL}/D_{Z} < 1,5 , insbesondere kleiner 1,2 ist, d.h. A_{GL}/D_{Z} < 1,2.

9. Radnaben-Gleichlaufdrehgelenk-Einheit, bei welcher eine Radnabe (60, 90) mit einer Durchgangsöffnung (59, 89), die eine innere Wellenverzahnung (44, 74) trägt, mit dem Gelenkaußenteil (46, 76) eines Gleichlaufdrehgelenks (42, 72) verspannt ist, an dem ein Zapfen (53, 83) mit einer äußeren Wellenverzahnung (54, 84) angeformt ist, wobei innere Wellenverzahnung (44, 74) der Durchgangsöffnung (59, 89) und äußere Wellenverzahnung (54, 84) des Zapfens (53, 83) ineinandergreifen, und ein zweireihiges Radlager (43, 73) auf die Radnabe (60, 90) aufgeschoben ist, die einen inneren Lagerring (64, 94) umfaßt, an dem sich eine Stirnfläche (52, 82) des Gelenkaußenteils (46, 76) unmittelbar abstützt,
**dadurch gekennzeichnet,**
**daß** das Verhältnis aus Teilkreisdurchmesser des Radlagers TKD und Zapfenlänge L_{Z} größer 2 ist, d.h. TKD/L_{Z} > 2.

10. Einheit nach Anspruch 9,
**dadurch gekennzeichnet,**
**daß** das Verhältnis aus Teilkreisdurchmesser des Radlager TKD und Zapfenlänge L_{Z} größer 2,25 ist, d.h. TKD/L_{Z} > 2,25, insbesondere größer 2,85 ist, d.h. TKD/L_{Z} > 2,85.

11. Radnaben-Gleichlaufdrehgelenk-Einheit, bei welcher eine Radnabe (60, 90) mit einer Durchgangsöffnung (59, 89), die eine innere Wellenverzahnung (44, 74) trägt, mit dem Gelenkaußenteil (46, 76) eines Gleichlaufdrehgelenks (42, 72) verspannt ist, an dem ein Zapfen (53, 83) mit einer äußeren Wellenverzahnung (54, 84) angeformt ist, wobei innere Wellenverzahnung (44, 74) der Durchgangsöffnung (59, 89) und äußere Wellenverzahnung (54, 84) des Zapfens (53, 83) ineinandergreifen, und ein zweireihiges Radlager (43, 73) auf die Radnabe (60, 90) aufgeschoben ist, die einen inneren Lagerring (64, 94) umfaßt, an dem sich eine Stirnfläche (52, 82) des Gelenkaußenteils (46, 76) unmittelbar abstützt,
**dadurch gekennzeichnet,**
**daß** das Verhältnis aus Mittenabstand A_{GL} zwischen Gleichlaufdrehgelenk (42, 72) und Radlager (43, 73) einerseits und Zapfenlänge L_{Z} andererseits größer 1,95 ist, d.h. A_{GL}/L_{Z} > 1,95.

12. Einheit nach Anspruch 11,
**dadurch gekennzeichnet,**
**daß** das Verhältnis aus Mittenabstand A_{GL} zwischen Gleichlaufdrehgelenk (42, 72) und Radlager (43, 73) einerseits und Zapfenlänge L_{Z} andererseits größer 2,0 ist, d.h. A_{GL}/L_{Z} > 2,0.

13. Einheit nach einem der Ansprüche 1 bis 12,
**dadurch gekennzeichnet,**
**daß** das Radlager (43) ausschließlich einen separaten Lagerinnenring (64) umfaßt.

14. Einheit nach einem der Ansprüche 1 bis 13,
**dadurch gekennzeichnet,**
**daß** die Radnabe (60, 90) axial entgegengesetzt zur inneren Wellenverzahnung (54, 84) eine Durchmesserreduzierung (56, 86) der Durchgangsöffnung (59, 89) aufweist.

15. Einheit nach einem der Ansprüche 1 bis 14,
**dadurch gekennzeichnet,**
**daß** der Zapfen (53, 83) eine zentrale Gewindebohrung (55, 85) aufweist, in die eine Schraube (57, 87) zur Verspannung der Radnabe (60, 90) mit dem Gelenkaußenteil (46, 76) eingedreht ist.

16. Einheit nach Anspruch 15,
**dadurch gekennzeichnet,**
**daß** der Schraubenkopf (58, 88) sich im Bereich der Durchmesserreduzierung (56, 86) an einer Stützfläche (45, 75) der Radnabe (60, 90) abstützt.

17. Einheit nach einem der Ansprüche 1 bis 16,
**dadurch gekennzeichnet,**
**daß** das Gelenk ein Festgelenk (42) ist, wobei die Mitte des Gelenks M_{G} axial durch die Ebene der Kugelmitten bei gestrecktem Gelenk definiert ist.

18. Einheit nach einem der Ansprüche 1 bis 17,
**dadurch gekennzeichnet,**
**daß** das Gelenk ein Verschiebegelenk (72) ist, wobei die Mitte des Gelenks M_{G} axial durch die Ebene der Kugelmitten bei gestrecktem und auf die Mitte des axialen Verschiebewegs V_{S} eingestellten Gelenk definiert ist.

## Claims

1. A wheel hub/constant velocity joint unit wherein a wheel hub (60, 90) with a through-aperture (59, 89) carrying inner shaft teeth (44, 74) is clamped to the outer joint part (46, 76) of a constant velocity joint (42, 72), which outer joint part (46, 76) comprises a formed-on journal (53, 83) with outer shaft teeth (54, 84), wherein the inner shaft teeth (44, 74) of the through-aperture (59, 89) and the outer shaft teeth (54, 84) of the journal (53, 83) engage one another, and wherein a double-row wheel bearing (43, 73) is slid on to the wheel hub (60, 90) which bearing /43, 73) comprises an inner bearing race (64, 94) which directly supports an end face (52, 82) of the outer joint part (46, 76),
**characterised in**
**that** half the sum of the pitch circle diameter PCD of the joint balls of the constant velocity joint and the bearing width B_{L} is greater than the centre-to-centre distance A_{GL} between the constant velocity universal joint (42, 72) and the wheel bearing (43, 73), i.e. (PCD + B_{L})/2 > A_{GL}.

2. A unit according to claim 1,
**characterised in**
**that** the ratio of the bearing width B_{L} and the journal diameter at the bearing base D_{Z} is smaller than 1, i.e. B_{L}/D_{Z} < 1.

3. A unit according to claim 1,
**characterised in**
**that** the ratio of the journal length L_{Z} and the pitch circle diameter of the bearing balls TKD is smaller than 0.5, i.e. L_{Z}/TKD < 0.5.

4. A unit according to claim 1,
**characterised in**
**that** the ratio of the used teeth length L_{VERZ} and the pitch circle diameter of the bearing balls TKD is smaller than 0.25, i.e. L_{VERZ}/TKD < 0.25.

5. A unit according to claim 1,
**characterised in**
**that** the ratio of the pitch circle diameter of the bearing balls TKD and the bearing width B_{L} is greater than 1.9, i.e. TKD/B_{L} > 1.9.

6. A unit according to claim 1,
**characterised in**
**that** the ratio of the cross-sectional area A_{E} of the wheel hub (60, 90) in the region of a separate inner bearing race (64, 94) and the square of the elongation length L_{DEHN} of a bolt (57, 87) for connecting the wheel hub (60, 90) and outer joint part (46, 76) is greater than 0.2, i.e. A_{E}/L_{DEHN}² > 0.2.

7. A wheel hub/constant velocity joint unit wherein a wheel hub (60, 90) with a through-aperture (59, 89) carrying inner shaft teeth (44, 74) is clamped to the outer joint part (46, 76) of a constant velocity joint (42, 72), which outer joint part (46, 76) comprises a formed-on journal (53, 83) with outer shaft teeth (54, 84), wherein the inner shaft teeth (44, 74) of the through-aperture (59, 89) and the outer shaft teeth (54, 84) of the journal (53, 83) engage one another, and wherein a double-row wheel bearing (43, 73) is slid on to the wheel hub (60, 90) which bearing (43, 73) comprises an inner bearing race (64, 94) which directly supports an end face (52, 82) of the outer joint part (46, 76),
**characterised in**
**that** the ratio of the centre-to-centre distance A_{GL} between the constant velocity joint (42, 72) and the wheel bearing (43, 73) on the one hand and the journal diameter at the bearing base D_{Z} on the other hand is smaller than 2, i.e. A_{GL}/D_{Z} < 2.

8. A unit according to claim 7,
**characterised in**
**that** the ratio of the centre-to-centre distance A_{GL} between the constant velocity universal joint (42, 72) and the wheel bearing (43, 73) on the one hand and the journal diameter at the journal base D_{Z} on the other hand is smaller than 1.5, i.e. A_{GL}/D_{Z} < 1.5, more particularly smaller than 1.2, i.e. A_{GL}/D_{Z} < 1.2.

9. A wheel hub/constant velocity joint unit wherein a wheel hub (60, 90) with a through-aperture (59, 89) carrying an inner shaft teeth (44, 74) is clamped to the outer joint part (46, 76) of a constant velocity joint (42, 72), which outer joint part (46, 76) comprises a formed-on journal (53, 83) with outer shaft teeth (54, 84), wherein the inner shaft teeth (44, 74) of the through-aperture (59, 89) and the outer shaft teeth (54, 84) of the journal (53, 83) engage one another, and wherein a double-row wheel bearing (43, 73) is slid on to the wheel hub (60, 90) which bearing (43, 73) comprises an inner bearing race (64, 94) which directly supports an end face (52, 82) of the outer joint part (46, 76),
**characterised in**
**that** the ratio of the pitch circle diameter of the wheel bearing TKD and the journal length L_{Z} is greater than 2, i.e. TKD/L_{Z} > 2.

10. A unit according to claim 9,
**characterised in**
**that** the ratio of the pitch circle diameter of the wheel bearing TKD and the journal length L_{Z} is greater than 2.25, i.e. TKD/L_{Z} > 2.25, more particularly greater than 2.85, i.e. TKD/L_{Z} > 2.85.

11. A wheel hub/constant velocity joint unit wherein a wheel hub (60, 90) with a through-aperture (59, 89) carrying an inner shaft teeth (44, 74) is clamped to the outer joint part (46, 76) of a constant velocity joint (42, 72), which outer joint part (46, 76) comprises a formed-on journal (53, 83) with outer shaft teeth (54, 84), wherein the inner shaft teeth (44, 74) of the through-aperture (59, 89) and the outer shaft teeth (54, 84) of the journal (53, 83) engage one another, and wherein a double-row wheel bearing (43, 73) is slid on to the wheel hub (60, 90) which bearing (43, 73) comprises an inner bearing race (64, 94) which directly supports an end face (52, 82) of the outer joint part (46, 76),
**characterised in**
**that** the ratio of the centre-to-centre distance A_{GL} between the constant velocity universal joint (42, 72) and the wheel bearing (43, 73) on the one hand and the journal length L_{Z} on the other hand is greater than 1.95, i.e. A_{GL} /L_{Z} > 1.95.

12. A unit according to claim 11,
**characterised in**
**that** the ratio of the centre-to-centre distance A_{GL} between the constant velocity universal joint (42, 72) and the wheel bearing (43, 73) on the one hand and the journal length L_{Z} on the other hand is greater than 2.0, i.e. A_{GL} /L_{Z} > 2.0.

13. A unit according to any one of claims 1 to 12,
**characterised in**
**that** the wheel bearing (43) comprises a separate bearing race (64) only.

14. A unit according to any one of claims 1 to 13,
**characterised in**
**that** the wheel hub (60, 90) comprises, at the axially opposite end relative to the inner shaft teeth (54, 84), a reduced diameter (56, 86) of the through-aperture (59, 89).

15. A unit according to any one of claims 1 to 14,
**characterised in**
**that** the journal (53, 83) comprises a central threaded bore (55, 85) into which there is threaded a bolt (57, 87) for clamping the wheel hub (60, 90) to the outer joint part (46, 76).

16. A unit according to claim 15,
**characterised in**
**that,** in the region of the reduced diameter (56, 86), the bolt head (58, 88) is supported on a supporting face (45, 75) of the wheel hub (60, 90).

17. A unit according to any one of claims 1 to 16,
**characterised in**
**that** the joint is a fixed joint (42) wherein the centre of the joint M_{G} is defined axially by the plane of the ball centres when the joint is in the aligned condition.

18. A unit according to any one of claims 1 to 17,
**characterised in**
**that** the joint is a plunging joint (72), wherein the centre of the joint M_{G} is defined axially by the plane of the ball centres when the joint is in the aligned condition and when the joint is set to the centre of the axial plunging path V_{S}.

## Revendications

1. Unité formée d'un joint tournant homocinétique et d'un moyeu de roue, dans laquelle un moyeu de roue (60, 90) avec une ouverture de passage (59, 89), qui porte une denture d'arbre intérieure (44, 74), est serré sur la partie extérieure de joint (46, 76) d'un joint tournant homocinétique (42, 72) sur laquelle est formé un tourillon (53, 83) comportant une denture d'arbre extérieure (54, 84), la denture d'arbre intérieure (44, 74) de l'ouverture de passage (59, 89) et la denture d'arbre extérieure (54, 84) du tourillon (53, 83) étant en prise réciproque, et un roulement de roue (43, 73) à deux rangées étant emmanché sur le moyeu de roue (60, 90) qui supporte une bague intérieure de roulement (64, 94) contre laquelle s'appuie directement une surface frontale (52, 82) de la partie extérieure de joint (46, 76),
**caractérisée en ce que** la moitié de la somme formée par le diamètre primitif PCD d'agencement des billes du joint tournant homocinétique et par la largeur B_{L} du roulement, est plus grande que la distance de centre à centre A_{GL} entre le joint tournant homocinétique (42, 72) et le roulement de roue (43, 73), c'est-à-dire (PCD + B_{L})/2 > A_{GL}.

2. Unité selon la revendication 1,
**caractérisée en ce que** le rapport entre la largeur B_{L} du roulement et le diamètre D_{Z} du tourillon au niveau de la base du roulement est inférieur à 1, c'est-à-dire que B_{L}/D_{Z} < 1.

3. Unité selon la revendication 1,
**caractérisée en ce que** le rapport entre la longueur L_{Z} du tourillon et le diamètre primitif TKD d'agencement des billes du roulement est inférieur à 0,5, c'est-à-dire que L_{Z}/TKD < 0,5.

4. Unité selon la revendication 1,
**caractérisée en ce que** le rapport entre la longueur de denture utilisée L_{VERZ}. et le diamètre primitif TKD d'agencement des billes du roulement est inférieur à 0,25, c'est-à-dire que L_{VERZ.}/TKD < 0,25.

5. Unité selon la revendication 1,
**caractérisée en ce que** le rapport entre le diamètre primitif TKD d'agencement des billes du roulement et la largeur B_{L} du roulement est supérieur à 1,9, c'est-à-dire que TKD/B_{L} > 1,9.

6. Unité selon la revendication 1,
**caractérisée en ce que** le rapport entre la surface de section A_{E} du moyeu de roue (60, 90) dans la zone d'une bague intérieure de roulement (64, 94) séparée et le carré de la longueur d'allongement L_{DEHN} d'une vis (57, 87) pour l'assemblage du moyeu de roue (60, 90) et de la partie extérieure de joint (46, 76), est supérieur à 0,2, c'est-à-dire que A_{E}/L_{DEHN}² > 0,2.

7. Unité formée d'un joint tournant homocinétique et d'un moyeu de roue, dans laquelle un moyeu de roue (60, 90) avec une ouverture de passage (59, 89), qui porte une denture d'arbre intérieure (44, 74), est serré sur la partie extérieure de joint (46, 76) d'un joint tournant homocinétique (42, 72) sur laquelle est formé un tourillon (53, 83) comportant une denture d'arbre extérieure (54, 84), la denture d'arbre intérieure (44, 74) de l'ouverture de passage (59, 89) et la denture d'arbre extérieure (54, 84) du tourillon (53, 83) étant en prise réciproque, et un roulement de roue (43, 73) à deux rangées étant emmanché sur le moyeu de roue (60, 90) qui supporte une bague intérieure de roulement (64, 94) contre laquelle s'appuie directement une surface frontale (52, 82) de la partie extérieure de joint (46, 76),
**caractérisée en ce que** le rapport entre la distance de centre à centre A_{GL} entre le joint tournant homocinétique (42, 72) et le roulement de roue (43, 73) d'une part, et le diamètre D_{Z} du tourillon au niveau de la base du tourillon d'autre part, est inférieur à 2, c'est-à-dire que A_{GL}/D_{Z} < 2.

8. Unité selon la revendication 7,
**caractérisée en ce que** le rapport entre la distance de centre à centre A_{GL} entre le joint tournant homocinétique (42, 72) et le roulement de roue (43, 73) d'une part, et le diamètre D_{Z} du tourillon au niveau de la base du tourillon d'autre part, est inférieur à 1,5, c'est-à-dire que A_{GL}/D_{Z} < 1,5, notamment inférieur à 1,2, c'est-à-dire que A_{GL}/D_{Z} < 1,2.

9. Unité formée d'un joint tournant homocinétique et d'un moyeu de roue, dans laquelle un moyeu de roue (60, 90) avec une ouverture de passage (59, 89), qui porte une denture d'arbre intérieure (44, 74), est serré sur la partie extérieure de joint (46, 76) d'un joint tournant homocinétique (42, 72) sur laquelle est formé un tourillon (53, 83) comportant une denture d'arbre extérieure (54, 84), la denture d'arbre intérieure (44, 74) de l'ouverture de passage (59, 89) et la denture d'arbre extérieure (54, 84) du tourillon (53, 83) étant en prise réciproque, et un roulement de roue (43, 73) à deux rangées étant emmanché sur le moyeu de roue (60, 90) qui supporte une bague intérieure de roulement (64, 94) contre laquelle s'appuie directement une surface frontale (52, 82) de la partie extérieure de joint (46, 76),
**caractérisée en ce que** le rapport entre le diamètre primitif TKD des billes du roulement de roue et la longueur L_{Z} du tourillon est supérieur à 2, c'est-à-dire TKD/L_{Z} > 2.

10. Unité selon la revendication 9,
**caractérisée en ce que** le rapport entre le diamètre primitif TKD des billes du roulement de roue et la longueur L_{Z} du tourillon est supérieur à 2,25, c'est-à-dire TKD/L_{Z} > 2,25, notamment supérieur à 2,85, c'est-à-dire TKD/L_{Z} > 2,85.

11. Unité formée d'un joint tournant homocinétique et d'un moyeu de roue, dans laquelle un moyeu de roue (60, 90) avec une ouverture de passage (59, 89), qui porte une denture d'arbre intérieure (44, 74), est serré sur la partie extérieure de joint (46, 76) d'un joint tournant homocinétique (42, 72) sur laquelle est formé un tourillon (53, 83) comportant une denture d'arbre extérieure (54, 84), la denture d'arbre intérieure (44, 74) de l'ouverture de passage (59, 89) et la denture d'arbre extérieure (54, 84) du tourillon (53, 83) étant en prise réciproque, et un roulement de roue (43, 73) à deux rangées étant emmanché sur le moyeu de roue (60, 90) qui supporte une bague intérieure de roulement (64, 94) contre laquelle s'appuie directement une surface frontale (52, 82) de la partie extérieure de joint (46, 76),
**caractérisée en ce que** le rapport entre la distance de centre à centre A_{GL} entre le joint tournant homocinétique (42, 72) et le roulement de roue (43, 73) d'une part, et la longueur L_{Z} du tourillon d'autre part, est supérieur à 1,95, c'est-à-dire A_{GL}/L_{Z} > 1,95.

12. Unité selon la revendication 11,
**caractérisée en ce que** le rapport entre la distance de centre à centre A_{GL} entre le joint tournant homocinétique (42, 72) et le roulement de roue (43, 73) d'une part, et la longueur L_{Z} du tourillon d'autre part, est supérieur à 2,0, c'est-à-dire A_{GL}/L_{Z} > 2,0.

13. Unité selon l'une des revendications 1 à 12,
**caractérisée en ce que** le roulement de roue (43) comprend exclusivement une seule bague intérieure de roulement (64) séparée.

14. Unité selon l'une des revendications 1 à 13,
**caractérisée en ce que** le moyeu de roue (60, 90) présente axialement à l'opposé de la denture d'arbre intérieure (54, 84), une réduction de diamètre (56, 86) de l'ouverture de passage (59, 89).

15. Unité selon l'une des revendications 1 à 14,
**caractérisée en ce que** le tourillon (53, 83) présente un alésage fileté central (55, 85) dans lequel est vissée une vis (57, 87) pour serrer le moyeu de roue (60, 90) avec la partie extérieure de joint (46, 76).

16. Unité selon la revendication 15,
**caractérisée en ce que** la tête de vis (58, 88) s'appuie, dans la zone de la réduction de diamètre (56, 86), sur une surface d'appui (45, 75) du moyeu de roue (60, 90).

17. Unité selon l'une des revendications 1 à 16,
**caractérisée en ce que** le joint est un joint fixe (42), le centre M_{G} du joint étant défini axialement par le plan des centres des billes lorsque le joint est en position étendue.

18. Unité selon l'une des revendications 1 à 17,
**caractérisée en ce que** le joint est un joint coulissant (72), le centre M_{G} du joint étant défini axialement par le plan des centres des billes lorsque le joint est en position étendue et est réglé sur le milieu de la course axiale de coulissement V_{S}.
